# EUROPEAN PATENT APPLICATION

(11) **EP 2 482 053 A1**
(43) Date of publication of application: **01.08.2012**
(21) Application number: 12152625.5
(22) Date of filing: 26.01.2012
(51) Int. Cl.: G01M 7/02, G01H 1/00, G01M 7/00, F03D 7/02

(54) **Comprehensive assessment system and assessment method for vibration and load of wind generating set**

(30) Priority: 30.01.2011 CN 201110033463
(71) Applicant: Sinovel Wind Group Co., Ltd, Haidian District, Beijing 100872 (CN)
(72) Inventor: Yang, Mingming, 100872 Haidian District, Beijing (CN); Zhang, Chao, 100872 Haidian District, Beijing (CN); He, Rongguang, 100872 Haidian District, Beijing (CN)
(74) Representative: Ehnis, Tobias

(57) **Abstract**

The invention discloses a comprehensive assessment system and a comprehensive assessment method for vibration and load of a wind generating set. The system comprises a wind generating set model simulation module, which is configured to simulate a wind generating set model to acquire wind generating set model simulation data; a wind generating set sample assessment module, which is configured to assess wind generating set samples to acquire wind generating set sample assessment data; a wind generating set assessment module, which is configured to assess the vibration and the load of the wind generating set to acquire wind generating set assessment data; and a wind generating set expert analysis system, which is configured to analyze the wind generating set sample assessment data, the wind generating set model simulation data and the wind generating set assessment data to acquire an assessment result. The invention can be used for accurately testing, analyzing and assessing the load of each main component of the large wind generating set.

## Description

### FIELD OF THE TECHNOLOGY

The invention relates to the technical field of reliability research and assessment of wind generating sets, in particular to a comprehensive assessment system and a comprehensive assessment method for vibration and load of a wind generating set.

### BACKGROUND

With the development of wind power industry, the numbers of the produced wind generating sets is continually increased, the large-sized tendency of the sets are increasingly obvious, and the third industry of wind power generation, namely reliability research of the wind generating sets and operating maintenance and assessment of equipment become new growth points of the industry. In the field of reliability research and assessment of large equipment, the load is an important link of equipment assessment.

The load means internal force, external force and other factors for allowing a structure or member to generate deformation, or means various direct actions applied to an engineering structure so that the engineering structure or member generates effect. The load is the basis of the design of the wind generating set, and vibration is an important index for representing the load. The calculation and test results of the load are used as basis of structural power calculation, component strength design, mechanical strength design, mechanical component design and control strategy (namely control structure) design.

Damage and failure of main components (a tower, a blade, a transmission chain, a variable propeller, a yawing system and the like) are mainly resulted from insufficient comprehension on the load acted on the parts.

With the increment of individual capacity, the large wind generating set has increasingly higher requirement for the load control; and load calculation methods, structural dynamics design, mechanical design and control strategies are continuously upgraded. Particularly, the marine wind generating set is generally a large set and has higher requirement for the load; and an important basis can be provided for structural power calculation, component strength design, mechanical component design and control strategy (namely control structure) design of the wind generating set by accurately testing, analyzing and assessing the load of each main component of the large wind generating set.

Therefore, how to develop a comprehensive assessment system for vibration and load of a wind generating set is the research direction of technicians of the field.

### SUMMARY

One object of the present invention is to provide a comprehensive assessment system and a comprehensive assessment method for vibration and load of a wind generating set in order to solve the problems in the prior art.

One aspect of the present invention provides a comprehensive assessment system for the vibration and the load of the wind generating set. The system comprises:

a wind generating set model simulation module, configured to simulate a wind generating set model to acquire wind generating set model simulation data;

a wind generating set sample assessment module , configured to assess wind generating set samples to acquire wind generating set sample assessment data;

a wind generating set assessment module ,configured to assess the vibration and the load of the wind generating set to acquire wind generating set assessment data; and

a wind generating set expert analysis system ,configured to analyze the wind generating set sample assessment data, the wind generating set model simulation data and the wind generating set assessment data to acquire an assessment result.

The wind generating set sample assessment module may comprise:

a wind generating set multi-sample vibration testing module, configured to test the vibration of a plurality of samples of the wind generating set to acquire vibration testing data;

a wind generating set multi-sample strain testing module, configured to test strain load of the plurality of samples of the wind generating set to acquire strain load testing data; and

a data analysis and feature extraction module, configured to analyze the vibration testing data and the strain load testing data of the wind generating set samples and extracting features.

The wind generating set multi-sample vibration testing module may comprise a vibration sensor and a signal acquisition unit, wherein the vibration sensor is configured to acquire vibration signals and convert the vibration signals into corresponding electrical signals, and the signal acquisition unit is configured to acquire the electrical signals and correspondingly process the electrical signals to acquire the vibration testing data.

The wind generating set multi-sample strain testing module may comprise a strain sensor and a signal acquisition unit, wherein the strain sensor is configured to acquire strain signals and convert the strain signals into corresponding electrical signals, and the signal acquisition unit is configured to acquire the electrical signals and correspondingly process the electrical signals to acquire the strain load testing data.

The wind generating set assessment module may comprise:

a wind generating set vibration testing module, configured to test the vibration of an assessed wind generating set to acquire vibration testing data;

a wind generating set strain testing module, configured to test the strain load of the assessed wind generating set to acquire strain load testing data; and

a data analysis and feature extraction module, configured to analyze the vibration testing data and the strain load testing data of the assessed wind generating set and extracting features.

The wind generating set vibration testing module may comprise a vibration sensor and a signal acquisition unit, wherein the vibration sensor is configured to acquire vibration signals and convert the vibration signals into corresponding electrical signals, and the signal acquisition unit is configured to acquire the electrical signals and correspondingly process the electrical signals to acquire the vibration testing data.

The wind generating set strain testing module may comprise a strain sensor and a signal acquisition unit, wherein the strain sensor is configured to acquire strain signals and convert the strain signals into corresponding electrical signals, and the signal acquisition unit is configured to acquire the electrical signals and correspondingly process the electrical signals to acquire the strain load testing data.

The wind generating set model simulation module is a simulation calculation and feature extraction module, and is configured to simulate a wind generating set model to acquire the wind generating set model simulation data.

The wind generating set expert analysis system may comprise a wind generating set vibration and load expert system, and a wind generating set vibration and load expert analysis system, wherein the wind generating set vibration and load expert system is connected with the wind generating set model simulation module and the wind generating set sample assessment module, and the wind generating set vibration and load expert analysis system is an analysis system for comprehensively assessing the tested wind generating set by combining the wind generating set vibration and load expert system.

The wind generating set vibration and load expert system may comprise:

a multi-sample testing and analyzing database, connected with the wind generating set sample assessment module and configured to test and analyze multiple samples of the wind generating set and store corresponding testing data;

a simulation analysis database of corresponding type and working condition, connected with the wind generating set model simulation module and configured to perform simulation analysis on the wind generating set model and store the corresponding simulation data; and

an assessment unit for integrating simulation and testing data analysis, connected with the multi-sample testing and analyzing database and the simulation analysis database of the corresponding type and working condition, and configured to comprehensively analyze and assess the testing data and the simulation data.

The wind generating set samples comprise a new set sample, a half-year operating set sample, a one-year operating set sample, a two-year operating set sample and an over two-year operating set sample.

The other aspect of the present invention provides an comprehensive assessment method for the vibration and the load of the wind generating set, and the method comprises the following steps of:

Step S1, establishing a simulation calculation model for the wind generating set of a certain type;

Step S2, performing simulation calculation and feature analysis corresponding to a test based on the established wind generating set model to acquire simulation data of the wind generating set;

Step S3, performing multiple-sample vibration test, data arrangement, data mining and analysis, and feature extraction on the wind generating set of the same type to acquire sample vibration testing data;

Step S4, performing multiple-sample strain load test, data arrangement, data mining and analysis, and feature extraction on the wind generating set of the same type to acquire sample strain load testing data;

Step S5, integrating the simulation calculation of vibration and load and multi-sample field testing data support of the wind generating set to establish a complete vibration and load expert system of the wind generating set;

Step S6, performing a test analysis comprising vibration test analysis and load test analysis on an assessed wind generating set to acquire vibration testing data and strain load testing data; and

Step S7, performing switchover analysis and assessment on the assessed wind generating set according to the vibration and load expert system of the wind generating set established in the step S5 and a result of the test analysis in the step S6 to give an assessment result.

In the step S2, the simulation calculation is vibration simulation calculation and load simulation calculation regarding the set model under certain working condition and control strategy.

The another aspect of the present invention provides a comprehensive assessment method for the vibration and the load of the wind generating set, and the method comprises the following steps of:

simulating a wind generating set model to acquire wind generating set model simulation data;

assessing wind generating set samples to acquire sample assessment data of the wind generating set samples;

assessing a to-be-tested wind generating set to acquire to-be-tested assessment data of the to-be-tested wind generating set; and

performing assessment according to the simulation data, the sample assessment data and the to-be-tested assessment data to acquire an assessment result of the to-be-tested wind generating set.

According to the comprehensive assessment method for the vibration and the load of the wind generating set, preferably the step of assessing the wind generating set samples to acquire the sample assessment data of the wind generating set samples comprises the operation of performing vibration test and strain load test on the wind generating set samples to acquire sample vibration testing data and sample strain load testing data of the wind generating set samples as the sample assessment data; and

the step of assessing the to-be-tested wind generating set to acquire the to-be-tested assessment data of the wind generating set comprises the operation of performing vibration test and strain load test on the to-be-tested wind generating set to acquire to-be-tested vibration testing data and to-be-tested strain load testing data of the to-be-tested wind generating set as the to-be-tested assessment data.

According to the comprehensive assessment method for the vibration and the load of the wind generating set, preferably the step of acquiring the assessment result of the to-be-tested wind generating set according to the simulation data, the sample assessment data and the to-be-tested assessment data comprises the following operations of:

correcting the simulation data according to the sample assessment data; and

assessing the to-be-tested assessment data according to the corrected sample assessment data to acquire the assessment result of the to-be-tested wind generating set.

The present invention can be used for accurately testing, analyzing and assessing the load of each main component of the large wind generating set, and can provide an important basis for structural power calculation, component strength design, mechanical component design and control strategy (namely control structure) design of the wind generating set.

### BRIEF DESCRIPTION OF THE DRAWINGS

Figure 1 is a composition block diagram of a comprehensive assessment system for vibration and load of a wind generating set in one embodiment of the invention;

Figure 2 is a composition block diagram of one embodiment of the comprehensive assessment system for the vibration and the load of the wind generating set of the invention;

Figure 3 is a composition block diagram of testing wind generating set samples in one embodiment of the invention;

Figure 4 is a composition block diagram of testing a wind generating set in one embodiment of the invention;

Figure 5 is a schematic figure of one embodiment of the comprehensive assessment system for the vibration and the load of the wind generating set of the invention;

Figure 6 is a schematic figure of the other embodiment of the comprehensive assessment system for the vibration and the load of the wind generating set of the invention;

Figure 7 is a schematic figure of the comprehensive assessment system for the vibration and the load of the wind generating set in one embodiment of the invention;

Figure 8 is a flow diagram of a comprehensive assessment method for the vibration and the load of the wind generating set in one embodiment of the invention.

Specification of drawing marks: 1-comprehensive assessment system for vibration and load of wind generating set, 10-wind generating set model simulation module, 11-wind generating set model, 20-wind generating set sample assessment module, 21-wind generating set sample, 201-wind generating set multi-sample vibration testing module, 2011, 3011-vibration sensor, 2012, 3012-signal acquisition unit, 202-wind generating set multi-sample strain testing module, 2021, 3021-strain sensor, 2022, 3022-signal acquisition unit, 203-data analysis and feature extraction module, 30-wind generating set assessment module, 301-wind generating set vibration testing module, 302-wind generating set strain testing module, 303-data analysis and feature extraction module, 31-wind generating set, 40-wind generating set expert analysis system, 401-wind generating set vibration and load expert system, 4011-multi-sample testing and analyzing database, 4012-simulation analysis database of corresponding type and working condition, 4013-assessment unit for integrating simulation and testing data analysis, and 402-wind generating set vibration and load expert analysis system.

### DETAILED DESCRIPTION

The above and additional technical characteristics and features of the invention are detailed by referring to the drawings.

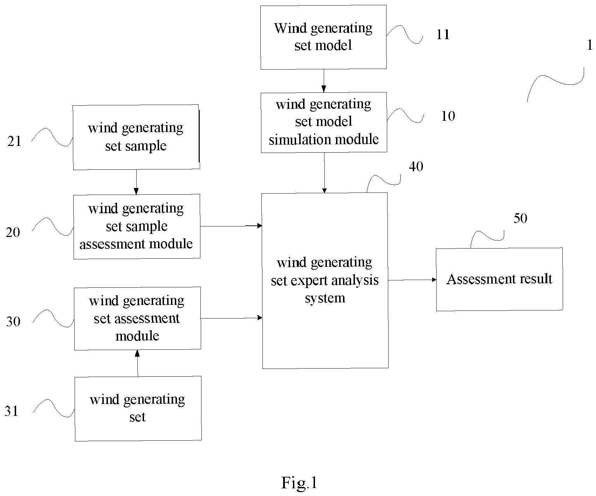

Figure 1 is a composition block diagram of a comprehensive assessment system for vibration and load of a wind generating set in one embodiment of the invention. The embodiment of the invention provides a comprehensive assessment system for the vibration and the load of the wind generating set 1. The system 1 comprises a wind generating set model simulation module 10, a wind generating set sample assessment module 20, a wind generating set assessment module 30 and a wind generating set expert analysis system 40. The wind generating set model simulation module 10 is configured to simulate a wind generating set model 11 to acquire a group of wind generating set model simulation data; the wind generating set sample assessment module 20 is configured to assess wind generating set samples 21 to acquire a group of wind generating set sample assessment data; the wind generating set assessment module 30 is configured to assess a wind generating set 31 to acquire wind generating set assessment data; and the wind generating set expert analysis system 40 is configured to analyze the wind generating set model simulation data, the wind generating set sample assessment data and the wind generating set assessment data to acquire an assessment result 50.

In the technical solution provided by the above embodiment, the wind generating set model can be built by adopting the conventional theoretical data model, and the data model is operated by inputting information such as wind condition parameters, control parameters and the like to perform simulation to acquire simulation data. The final assessment result is acquired by combining the data of three aspects, namely simulation data, sample assessment data and assessment data of the to-be-tested wind generating set in the technical solution of the embodiment. In the assessment process, both the simulation data and the sample assessment data are considered, so that the problem of great difference from the actual condition when the simulation data is separately adopted can be solved, the problem of individuation produced when the sample assessment data is separately adopted can also be solved, and more accurate and reliable to-be-tested wind generating set assessment result can be acquired.

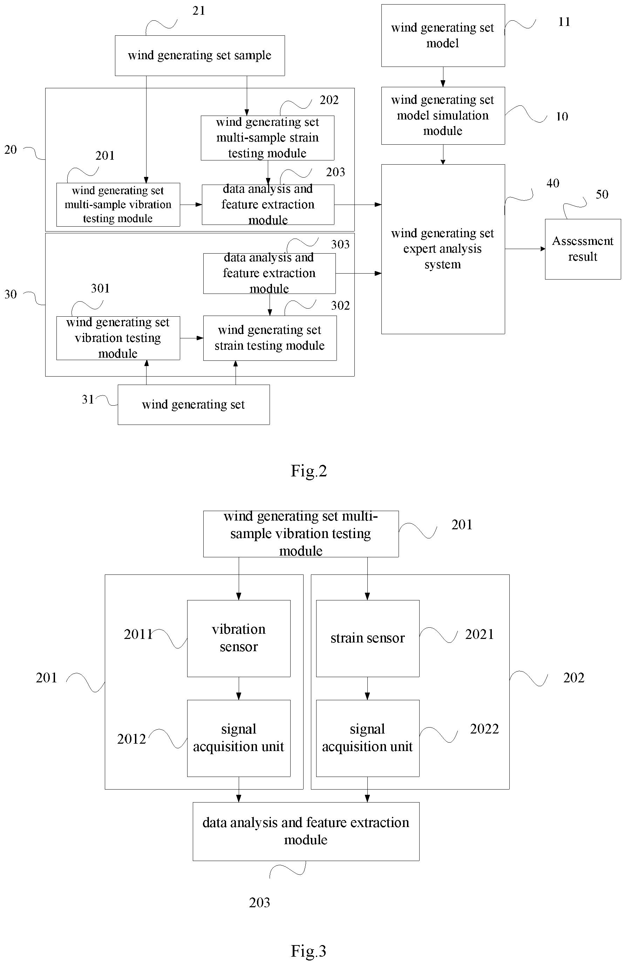

Figure 2 is a composition block diagram of one embodiment of the comprehensive assessment system for the vibration and load of the wind generating set of the invention. As shown in the figure, the wind generating set sample assessment module 20 comprises a wind generating set multi-sample vibration testing module 201, a wind generating set multi-sample strain testing module 202 and a data analysis and feature extraction module 203. The wind generating set multi-sample vibration testing module 201 is configured to test the vibration of wind generating set samples 21 to acquire vibration testing data, specifically, the same sample may be subjected to multiple times of test to acquire multiple sample vibration testing data, a plurality of samples may be tested respectively to acquire multiple sample vibration testing data, or the combination of both. The wind generating set multi-sample strain testing module 202 is configured to test strain load of the wind generating set samples 21 to acquire strain load testing data; and like the vibration testing data, the strain load testing data are multi-sample strain load testing data acquired by multiple times of test of the same sample, or respective test of multiple samples or the combination of both. The data analysis and feature extraction module 203 is configured to analyze the vibration testing data and the strain load testing data of the wind generating set samples and extracting features.

The wind generating set assessment module 30 comprises a wind generating set vibration testing module 301, a wind generating set strain testing module 302 and a data analysis and feature extraction module 303. The wind generating set vibration testing module 301 is configured to test the vibration of an assessed wind generating set 31 to acquire vibration testing data of the assessed wind generating set 31. The wind generating set strain testing module 302 is configured to test the strain load of the assessed wind generating set 31 to acquire strain load testing data of the assessed wind generating set 31. The data analysis and feature extraction module 303 is configured to analyze the vibration testing data and the strain load testing data of the assessed wind generating set 31 and extracting features.

Figure 3 is a composition block diagram of testing wind generating set samples in one embodiment of the invention. The wind generating set multi-sample vibration testing module 201 comprises a vibration sensor 2011 and a signal acquisition unit 2012. The vibration sensor 2011 is a vibration sensor matched with a tested object, has high precision, and is configured to acquire vibration signals and convert the vibration signals into corresponding electrical signals to acquire vibration testing data. The signal acquisition unit 2012 is testing signal acquisition equipment with higher precision and stronger programmability, and is configured to acquire the above electrical signals and correspondingly process the electrical signals. The above tested object is a wind generating set sample 21; the wind generating set sample 21 is one or more of parts such as a tower, a blade, a transmission system (comprising a main bearing, a main shaft, a gear box, a coupling and a generator bearing) and the like of the wind generating set; and the numbers of both the vibration sensor 2011 and the signal acquisition unit 2012 may be one or more.

The wind generating set multi-sample strain testing module 202 comprises a strain sensor 2021 and a signal acquisition unit 2022. The strain sensor 2021 is a strain sensor with certain testing precision, and is configured to acquire strain signals and convert the strain signals into corresponding electrical signals to acquire strain load testing data. The signal acquisition unit 2022 is testing signal acquisition equipment with higher precision and stronger programmability, and is configured to acquire the above electrical signals and correspondingly process the electrical signals. The above object for strain test is a wind generating set sample 21; the wind generating set sample 21 is one or more of parts such as a tower, a blade, a main bearing and the like of the wind generating set; and the numbers of both the strain sensor 2021 and the signal acquisition unit 2022 may be one or more.

The above wind generating set sample 21 comprises a new set sample, a half-year operating set sample, a one-year operating set sample, a two-year operating set sample and an over two-year operating set sample. the category of the samples may be selected one or more of the above various samples; and the number of each sample may be selected one or more.

The data analysis and feature extraction module 203 is connected with the signal acquisition unit 2012 of the wind generating set multi-sample vibration testing module 201 and configured to perform vibration analysis on the signals acquired by the signal acquisition unit 2012 and assess useful feature frequency, amplitude, feature statistic and the like.

The data analysis and feature extraction module 203 is connected with the signal acquisition unit 2022 of the wind generating set multi-sample strain testing module 202 and configured to perform vibration analysis on the signals acquired by the signal acquisition unit 2022 and assess useful feature frequency, amplitude, feature statistic and the like.

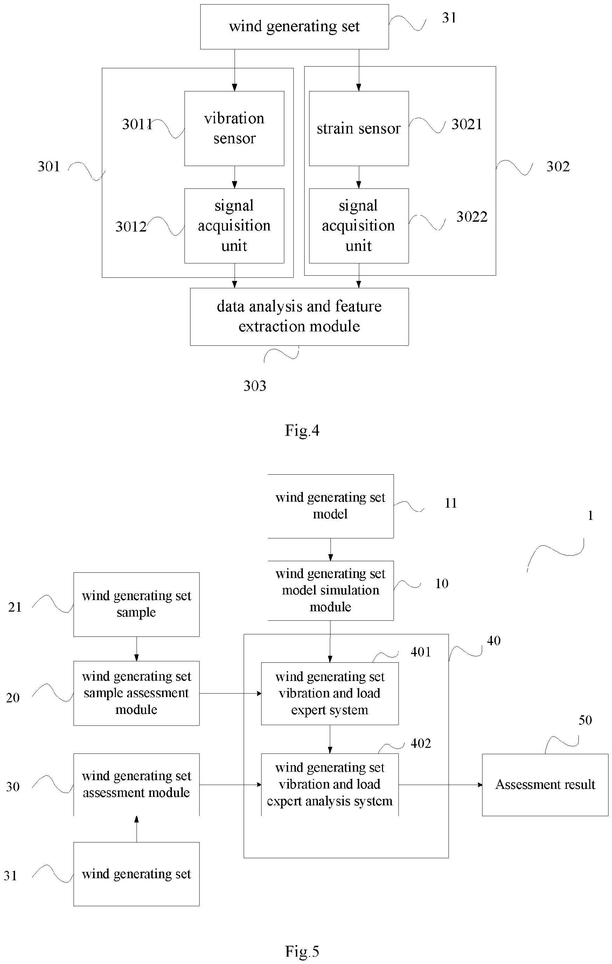

Figure 4 is a composition block diagram of testing the wind generating set in one embodiment of the invention. The wind generating set vibration testing module 301 comprises a vibration sensor 3011 and a signal acquisition unit 3012. The vibration sensor 3011 is a vibration sensor matched with a tested object, has high precision, and is configured to acquire vibration signals and convert the vibration signals into corresponding electrical signals to acquire vibration testing data. The signal acquisition unit 3012 is testing signal acquisition equipment with higher precision and stronger programmability, and is configured to acquire the above electrical signals and correspondingly process the electrical signals. The above tested object is an assessed wind generating set 31; the assessed wind generating set 31 is one or more of parts such as a tower, a blade, a transmission system (comprising a main bearing, a main shaft, a gear box, a coupling and a generator bearing) and the like of the wind generating set; and the numbers of both the vibration sensor 3011 and the signal acquisition unit 3012 may be one or more.

The wind generating set strain testing module 302 comprises a strain sensor 3021 and a signal acquisition unit 3022. The strain sensor 3021 is a strain sensor with certain testing precision, and is configured to acquire strain signals and convert the strain signals into corresponding electrical signals to acquire strain load testing data. The signal acquisition unit 3022 is testing signal acquisition equipment with higher precision and stronger programmability, and is configured to acquire the above electrical signals and correspondingly process the electrical signals. The above object for strain test is an assessed wind generating set 31; the assessed wind generating set 31 is one or more of parts such as a tower, a blade, a main bearing and the like of the assessed wind generating set 31; and the numbers of both the strain sensor 3021 and the signal acquisition unit 3022 may be one or more.

The data analysis and feature extraction module 303 is connected with the signal acquisition unit 3012 of the wind generating set vibration testing module 301 and configured to perform vibration analysis on the signals acquired by the signal acquisition unit 3012 and assess useful feature frequency, amplitude, feature statistic and the like.

The data analysis and feature extraction module 303 is connected with the signal acquisition unit 3022 of the wind generating set strain testing module 302 and configured to perform vibration analysis on the signals acquired by the signal acquisition unit 3022 and assess useful feature frequency, amplitude, feature statistic and the like.

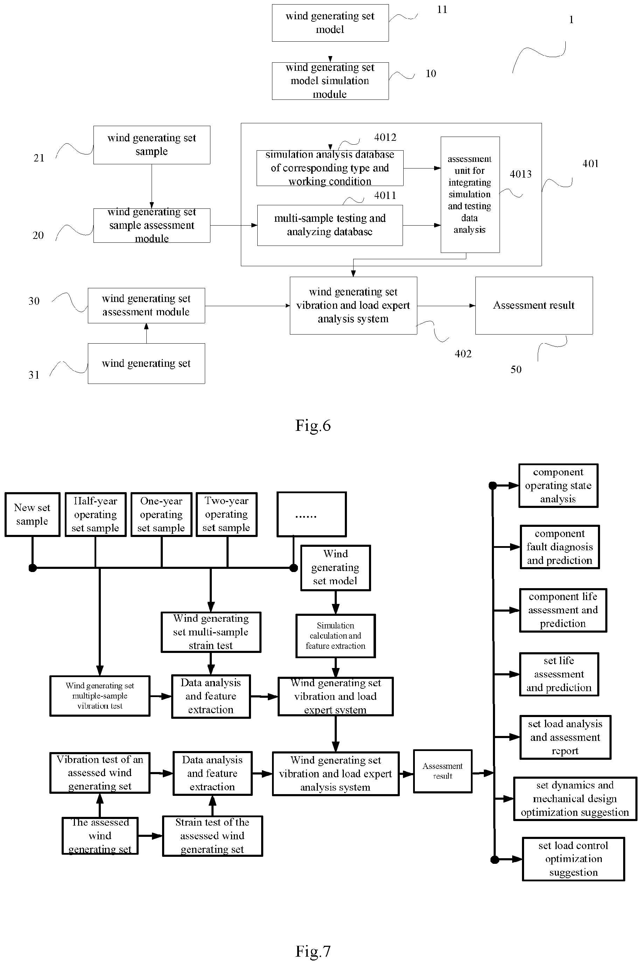

Figure 5 and Figure 6 show a schematic diagram of one embodiment of the comprehensive assessment system for the vibration and the load of the wind generating set of the invention and a schematic figure of the other embodiment of the comprehensive assessment system for the vibration and the load of the wind generating set of the invention respectively. The wind generating set expert analysis system 40 comprises a wind generating set vibration and load expert system 401 and a wind generating set vibration and load expert analysis system 402. The wind generating set vibration and load expert system 401 is connected with the wind generating set model simulation module 10 and the wind generating set sample assessment module 20 respectively, is an expert system established by combining analysis of the wind generating set model simulation module and multi-sample testing analysis of the same type. The wind generating set vibration and load expert system 401 comprises a multi-sample testing and analyzing database 4011, a simulation analysis database 4012 of corresponding type and working condition, and an assessment unit 4013 for integrating simulation and testing data analysis. The above multi-sample testing and analyzing database 4011 is connected with the wind generating set sample assessment module 20 and configured to test and analyze multiple samples of the wind generating set and store corresponding testing data; the simulation analysis database 4012 of the corresponding type and working condition is connected with the wind generating set model simulation module 10 and configured to perform simulation analysis on the wind generating set model and store the corresponding simulation data; and the assessment unit 4013 for integrating simulation and testing data analysis is connected with the multi-sample testing and analyzing database 4011 and the simulation analysis database 4012 of the corresponding type and working condition respectively and configured to comprehensively analyze and assess the testing data and the simulation data.

As shown in Figure 6, the wind generating set vibration and load expert analysis system 402 is connected with the assessment unit 4013 for integrating simulation and testing data analysis; and the wind generating set vibration and load expert analysis system 402 is an analysis system for comprehensively assessing the tested wind generating set 31 by combining the wind generating set vibration and load expert system 401. The vibration and load analysis method of the wind generating set vibration and load expert analysis system 402 mainly comprises comparative analysis of simulation and test under the same working condition, time domain waveform and statistic feature quantity analysis, frequency spectrum and its statistic feature quantity analysis, axis locus analysis of a rotating part, random resonance analysis for random working condition, waterfall plot analysis of multi-sample test, tendency analysis of set operating time, set and part operating fault pre-judgment and analysis, part life assessment and prediction, set life assessment and prediction and the like.

In conclusion, optionally, for a transmission system with obvious vibration feature and inconvenience for strain test, the assessment system can be mainly vibration testing analysis and assessment; and optionally, for big parts (a tower, a blade, a main bearing and the like) with lower feature frequency, the assessment system can be mainly strain load testing analysis and assessment.

Therefore, the vibration assessment system and the strain load assessment system in the invention complement each other, and the simulation, test and assessment methods of the systems reflect the load information of different parts of the wind generating set more comprehensively. The model simulation analysis of the set belongs to theoretical operating state analysis of the set, the expert system established by combining multi-sample test of the same type and corresponding simulation can obtain the operating state of the type in each life interval, and the reliability of the expert system is greatly improved by assisting proper analysis and processing method. The operating states of a fan and main components thereof can be certainly learnt by accurately testing and analyzing the tested wind generating set under various working conditions and combining the established expert system, and fault diagnosis, predictive analysis and expected life analysis are performed so as to provide objective suggestion for dynamics design, mechanical strength design and structural design of the set and the main components thereof and load control strategy optimization of the set.

The comprehensive assessment system for the vibration and the load of the wind generating set can accurately analyze the vibration and load properties of each main component and give the following analysis and assessment results (as shown in Figure 7):

1, accurately assessing the operating state of each main component of the set;

2, performing fault diagnosis and predictive analysis of the components according to the operating states of the components;

3, predicting the actual expected life of each main component according to the theoretical life curve of each main component;

4, calculating the expected life of the set by using the failure analysis theory;

5, integrating the above results to give a load analysis and assessment report of the wind generating set;

6, providing objective suggestion for dynamics design, mechanical strength design and structural design of the wind generating set; and

7, providing objective suggestion and assessment conclusion for load control strategy optimization of the wind generating set.

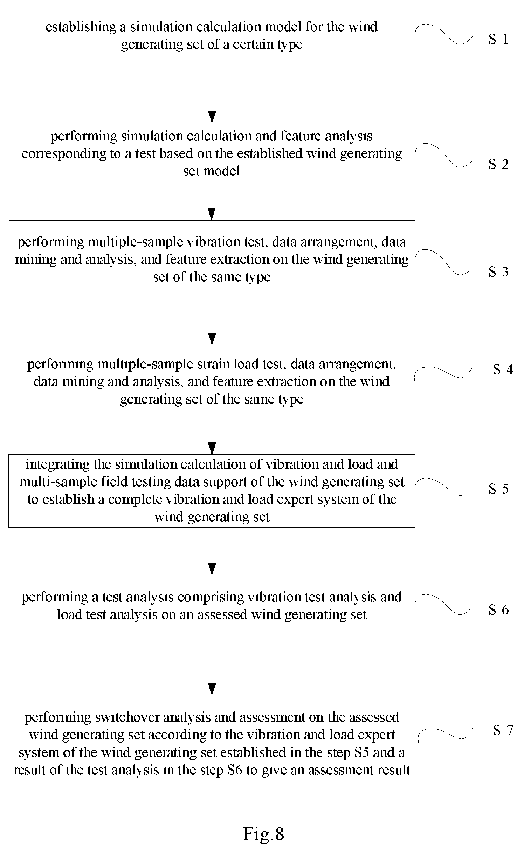

Figure 8 is a flow diagram of a comprehensive assessment method for the vibration and the load of the wind generating set in one embodiment of the invention. As shown in this figure, one aspect of the invention provides the comprehensive assessment method for the vibration and the load of the wind generating set; and the method comprises the following steps of:

Step S1, establishing a simulation calculation model for the wind generating set of a certain type;

Step S2, performing simulation calculation and feature analysis corresponding to a test based on the established wind generating set model to acquire simulation data of the wind generating set, which mainly comprises vibration simulation calculation and load simulation calculation regarding the set model under certain working condition and control strategy, which can be used as theoretical reference of the wind generating set vibration and load expert system;

Step S3, performing multiple-sample vibration test, data arrangement, data mining and analysis, feature extraction and so on, on the wind generating set of the same type to acquire sample vibration testing data;

Step S4, performing multiple-sample strain load test, data arrangement, data mining and analysis, and feature extraction on the wind generating set of the same type to acquire sample strain load testing data;

Step S5, integrating the simulation calculation of vibration and load and multi-sample field testing data support of the wind generating set to establish a complete vibration and load expert system of the wind generating set;

Step S6, performing a test analysis comprising vibration test analysis and load test analysis on an assessed wind generating set to acquire vibration testing data and strain load testing data; and

Step S7, performing switchover analysis and assessment on the assessed wind generating set according to the vibration and load expert system of the wind generating set established in the step S5 and a result of the test analysis in the step S6 to give an assessment result.

The obtained assessment result mainly comprises:

1, accurately assessing the operating state of each main component of the set;

2, performing fault diagnosis and predictive analysis of the components according to the operating states of the components;

3, predicting the actual expected life of each main component according to the theoretical life curve of each main component;

4, calculating the expected life of the set by using the failure analysis theory;

5, integrating the above results to give a load analysis and assessment report of the wind generating set;

6, providing objective suggestion for dynamics design, mechanical strength design and structural design of the wind generating set; and

7, providing objective suggestion and assessment conclusion for load control strategy optimization of the wind generating set.

In conclusion, the present invention can be used for accurately testing, analyzing and assessing the load of each main component of the large wind generating set, and can provide an important basis for structural power calculation, component strength design, mechanical component design and control strategy (namely control structure) design of the wind generating set.

The other aspect of the invention also provides a comprehensive assessment method for the vibration and the load of the wind generating set; and the assessment method is executed by preferably adopting the random assessment system provided by each embodiment of the invention, and comprises the following steps of:

simulating a wind generating set model to acquire wind generating set model simulation data;

assessing wind generating set samples to acquire sample assessment data of the wind generating set samples;

assessing a to-be-tested wind generating set to acquire to-be-tested assessment data of the to-be-tested wind generating set; and

performing assessment according to the simulation data, the sample assessment data and the to-be-tested assessment data to acquire an assessment result of the to-be-tested wind generating set.

The comprehensive assessment method for the vibration and the load of the wind generating set is preferably improved as: the step of assessing the wind generating set samples to acquire the sample assessment data of the wind generating set samples comprises the operation of performing vibration test and strain load test on the wind generating set samples to acquire sample vibration testing data and sample strain load testing data of the wind generating set samples as the sample assessment data; and

the step of assessing the to-be-tested wind generating set to acquire the to-be-tested assessment data of the wind generating set comprises the operation of performing vibration test and strain load test on the to-be-tested wind generating set to acquire to-be-tested vibration testing data and to-be-tested strain load testing data of the to-be-tested wind generating set as the to-be-tested assessment data.

The comprehensive assessment method for the vibration and the load of the wind generating set is preferably improved as: the step of acquiring the assessment result of the to-be-tested wind generating set according to the simulation data, the sample assessment data and the to-be-tested assessment data comprises the following operations of:

correcting the simulation data according to the sample assessment data; and

assessing the to-be-tested assessment data according to the corrected sample assessment data to acquire the assessment result of the to-be-tested wind generating set.

The specification is only illustrative but not restrictive for the invention, and those of ordinary skill in the art can understand that much modification, change or equivalence can be made without separating from the spirits and the range limited by the claims and is involved in the protective range of the invention.

In conclusion, the embodiments are only used for explaining the technical solutions of the invention and are not limited; though the invention is detailed by consulting the embodiments, the those of ordinary skill in the art should understand that: the technical solutions recorded in the embodiments can be modified, or partial technical characteristics are equivalently replaced; and by modifying or replacing, the essences of the corresponding technical solutions are not separated from the spirits and the ranges of the technical schemes.

## Claims

1. A comprehensive assessment system for vibration and load of a wind generating set, comprising:
a wind generating set model simulation module, configured to simulate a wind generating set model to acquire wind generating set model simulation data;
a wind generating set sample assessment module, configured to assess wind generating set samples to acquire wind generating set sample assessment data;
a wind generating set assessment module, configured to assess the vibration and the load of the wind generating set to acquire wind generating set assessment data; and
a wind generating set expert analysis system, configured to analyze the wind generating set sample assessment data, the wind generating set model simulation data and the wind generating set assessment data to acquire an assessment result.

2. The comprehensive assessment system according to the claim 1, wherein the wind generating set sample assessment module comprises:
a wind generating set multi-sample vibration testing module, configured to test the vibration of a plurality of samples of the wind generating set to acquire vibration testing data;
a wind generating set multi-sample strain testing module, configured to test strain load of the plurality of samples of the wind generating set to acquire strain load testing data; and
a data analysis and feature extraction module, configured to analyze the vibration testing data and the strain load testing data of the wind generating set samples and extracting features.

3. The comprehensive assessment system according to the claim 2, wherein the wind generating set multi-sample vibration testing module comprises a vibration sensor and a signal acquisition unit, wherein the vibration sensor is configured to acquire vibration signals and convert the vibration signals into corresponding electrical signals, and the signal acquisition unit is configured to acquire the electrical signals and correspondingly process the electrical signals to acquire the vibration testing data.

4. The comprehensive assessment system according to the claim 2, wherein the wind generating set multi-sample strain testing module comprises a strain sensor and a signal acquisition unit, wherein the strain sensor is configured to acquire strain signals and convert the strain signals into corresponding electrical signals, and the signal acquisition unit is configured to acquire the electrical signals and correspondingly process the electrical signals to acquire the strain load testing data.

5. The comprehensive assessment system according to the claim 1, wherein the wind generating set assessment module comprises:
a wind generating set vibration testing module, configured to test the vibration of an assessed wind generating set to acquire vibration testing data;
a wind generating set strain testing module, configured to test the strain load of the assessed wind generating set to acquire strain load testing data; and
a data analysis and feature extraction module, configured to analyze the vibration testing data and the strain load testing data of the assessed wind generating set and extracting features.

6. The comprehensive assessment system according to the claim 5, wherein the wind generating set vibration testing module comprises a vibration sensor and a signal acquisition unit, wherein the vibration sensor is configured to acquire vibration signals and convert the vibration signals into corresponding electrical signals, and the signal acquisition unit is configured to acquire the electrical signals and correspondingly process the electrical signals to acquire the vibration testing data.

7. The comprehensive assessment system according to the claim 5, wherein the wind generating set strain testing module comprises a strain sensor and a signal acquisition unit, wherein the strain sensor is configured to acquire strain signals and convert the strain signals into corresponding electrical signals, and the signal acquisition unit is configured to acquire the electrical signals and correspondingly process the electrical signals to acquire the strain load testing data.

8. The comprehensive assessment system according to the claim 1, wherein the wind generating set model simulation module is a simulation calculation and feature extraction module, and is configured to simulate a wind generating set model to acquire the wind generating set model simulation data.

9. The comprehensive assessment system according to the claim 1, wherein the wind generating set expert analysis system comprises a wind generating set vibration and load expert system, and a wind generating set vibration and load expert analysis system, wherein the wind generating set vibration and load expert system is connected with the wind generating set model simulation module and the wind generating set sample assessment module, and the wind generating set vibration and load expert analysis system is an analysis system for comprehensively assessing the tested wind generating set by combining the wind generating set vibration and load expert system.

10. The comprehensive assessment system according to the claim 1 or 9, wherein the wind generating set vibration and load expert system comprises:
a multi-sample testing and analyzing database, connected with the wind generating set sample assessment module and configured to test and analyze multiple samples of the wind generating set and store corresponding testing data;
a simulation analysis database of corresponding type and working condition, connected with the wind generating set model simulation module and configured to perform simulation analysis on the wind generating set model and store the corresponding simulation data; and
an assessment unit for integrating simulation and testing data analysis, connected with the multi-sample testing and analyzing database and the simulation analysis database of the corresponding type and working condition, and configured to comprehensively analyze and assess the testing data and the simulation data.

11. The comprehensive assessment system according to the claim 1, wherein the wind generating set samples comprise a new set sample, a half-year operating set sample, a one-year operating set sample, a two-year operating set sample and an over two-year operating set sample.

12. A comprehensive assessment method for the vibration and the load of the wind generating set, comprising the following steps of:
step S1, establishing a simulation calculation model for the wind generating set of a certain type;
step S2, performing simulation calculation and feature analysis corresponding to a test based on the established wind generating set model to acquire simulation data of the wind generating set;
step S3, performing multiple-sample vibration test, data arrangement, data mining and analysis, and feature extraction on the wind generating set of the same type to acquire sample vibration testing data;
step S4, performing multiple-sample strain load test, data arrangement, data mining and analysis, and feature extraction on the wind generating set of the same type to acquire sample strain load testing data;
step S5, integrating the simulation calculation of vibration and load and multi-sample field testing data support of the wind generating set to establish a complete vibration and load expert system of the wind generating set;
step S6, performing a test analysis comprising vibration test analysis and load test analysis on an assessed wind generating set to acquire vibration testing data and strain load testing data; and
step S7, performing switchover analysis and assessment on the assessed wind generating set according to the vibration and load expert system of the wind generating set established in the step S5 and a result of the test analysis in the step S6 to give an assessment result.

13. The comprehensive assessment method according to the claim 12 wherein in the S2, the simulation calculation is vibration simulation calculation and load simulation calculation under regarding the set model under certain working condition and control strategy.

14. A comprehensive assessment method for the vibration and the load of the wind generating set, comprising the following steps of:
simulating a wind generating set model to acquire wind generating set model simulation data;
assessing wind generating set samples to acquire sample assessment data of the wind generating set samples;
assessing the to-be-tested wind generating set to acquire to-be-tested assessment data of the to-be-tested wind generating set; and
performing assessment according to the simulation data, the sample assessment data and the to-be-tested assessment data to acquire an assessment result of the to-be-tested wind generating set.

15. The comprehensive assessment method according to the claim 14, wherein
the step of assessing the wind generating set samples to acquire the sample assessment data of the wind generating set samples comprises the operation of performing vibration test and strain load test on the wind generating set samples to acquire sample vibration testing data and sample strain load testing data of the wind generating set samples as the sample assessment data; and
the step of assessing the to-be-tested wind generating set to acquire the to-be-tested assessment data of the wind generating set comprises the operation of performing vibration test and strain load test on the to-be-tested wind generating set to acquire to-be-tested vibration testing data and to-be-tested strain load testing data of the to-be-tested wind generating set as the to-be-tested assessment data.

16. The comprehensive assessment method according to the claim 14 or 15, wherein the step of acquiring the assessment result of the to-be-tested wind generating set according to the simulation data, the sample assessment data and the to-be-tested assessment data comprises the following operations of:
correcting the simulation data according to the sample assessment data; and
assessing the to-be-tested assessment data according to the corrected sample assessment data to acquire the assessment result of the to-be-tested wind generating set.
